# EUROPEAN PATENT SPECIFICATION

(11) **EP 0 768 940 B1**
(45) Date of publication and mention of the grant of the patent: **24.11.1999**
(21) Application number: 95926058.9
(22) Date of filing: 09.06.1995
(51) Int. Cl.: B27B 17/00, A01G 23/08

(54) **CHAIN SAW GUIDE BAR WITH LIQUID SPRAY DEVICE**
KETTENSÄGESCHWERT MIT FLÜSSIGKEITSSPRÜHVORRICHTUNG
GUIDE-CHAINE A DISPOSITIF PULVERISATEUR DE LIQUIDE POUR TRONCONNEUSE

(30) Priority: 11.07.1994 SE 9402426
(43) Date of publication of application: 23.04.1997
(73) Proprietor: SANDVIK AKTIEBOLAG, 811 81 Sandviken (SE)
(72) Inventor: LEINI, Arvo, 828 00 Edsbyn (SE)
(74) Representative: Taquist, Lennart
(86) International application number: PCT/SE95/00692
(87) International publication number: WO 96/01725

(56) References cited:
- WO-A-94/16867
- FI-B- 91 208
- SE-A- 7 611 822
- SE-B- 469 974
- US-A- 5 050 303
- US-A- 5 143 131

## Description

### Background

It is previously known that chain saw guide bars can be provided with channels and orifices to spray the sawn surface with liquid, such as paint for colour coding or fungicide as described in patent SE 7611822-3, or both. Such guide bars are commonly used on vehicle-born chain saws.

For colour coding it is important to get distinct markings, and each liquid channel then has generally just one orifice. For spraying fungicide, it is important to cover a major part of the sawn surface, but at the same time not to spray outside that surface, which would constitute excessive waste of liquid and an environmental hazard.

In patent US 5,143,131 was described a guide bar design where the liquid channel has a multitude of orifices, all of which need not be open simultaneously. The choice of which orifices are to be open is regulated with slideable metal strips with orifices forming a different pattern from the orifices in the sideplate of the guide bar. The strips are moved with an external device, such as a hydraulic actuator on the underside of the guide bar, until the desired number of orifices coincide between the strip and the sideplate. Such a device is vulnerable, however, due to the slideable strips and the unprotected location of the hydraulic actuator. It is also difficult to have a reliable indication at the operator's cab of how large a surface is being sprayed.

The present invention concerns a chain saw guide bar for fungicide spraying, where the extent of the sprayed area can be varied in relation to the size of the sawn surface, without small movable parts and without actuators at the guide bar, and where it is simple to indicate for the operator how large an area is sprayed.

### Description

A guide bar according to the invention is provided with orifices which give the liquid a velocity component along the plane of the guide bar, not only vertical to the plane. Such orifices are described in the patent SE 9300180-8, where they were utilized to make liquid spray from orifices near the bar centerline hit the cut surface close to the edge of the bar, to allow return of the bar as soon as the saw chain has fully penetrated the tree trunk, with a smallar angular movement than otherwise. According to that patent the liquid is given a velocity component across the bar from the centerline towards the edge.

In a guide bar according to invention, a plurality of orifices are located to give the liquid a velocity component parallel to the bar centerline. The size of this velocity component and thus the width of the sprayed area measured along the bar depends on the liquid pressure in the channels of the bar before the orifices.

The orifices are located adjacent to a pressure equalizing chamber in the guide bar, to make the spray velocity independent of the liquid flow within the channels. By measuring the liquid pressure at a pump or pressure vessel in the operator's cab, the operator can judge the width of the sprayed area. The spraying occurs during angular motion of the bar while sawing, and the pressure may be automatically controlled in relation to the position of the gripping arms of the machine holding the tree, this position indicating the diameter of the tree.

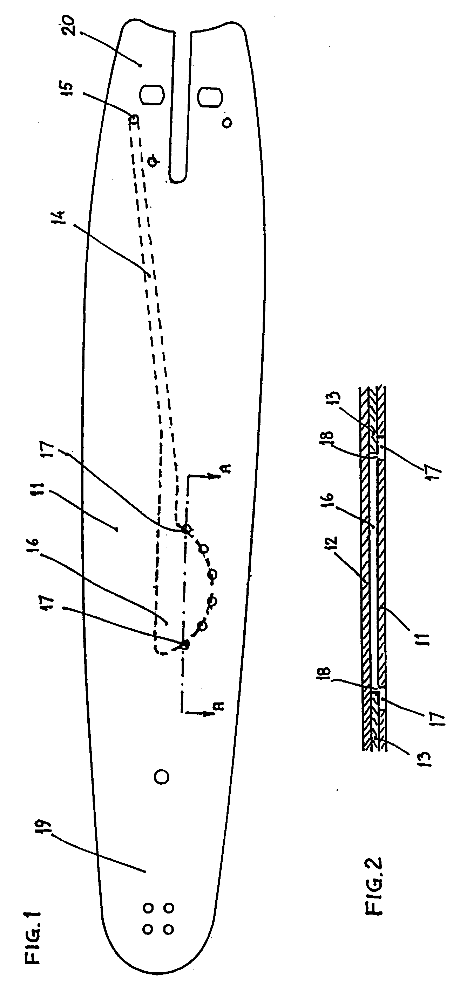

A guide bar with spray orifices in one sideplate according to the invention is shown in figure 1 in a view from below, and in figure 2 as a cross section through the pressure equalizing chamber. If desired, the bar can be made reversible and symmetrical with two pressure chambers and orifices in both sideplates.

The guide bar comprises two sideplates (11,12) and one center plate (13) joined by welding, brazing or adhesive. A liquid channel (14) is made as a cut-out in the center plate (13) to convey the liquid from a supply hole (15) near the clamping end (20) of the guide bar to a pressure equalizing chamber (16) with a larger cross section than the channel (14). This makes the velocity of the liquid within the chamber (16) much lower than in the channel (14). The spray velocity from all orifices is then equal, and dependent only on the pressure.

In the sideplate (11) there are orifices (17). Only a minor part (18) of the area along the edge of each orifice overlaps the pressure equalizing chamber (16). The orifices are large enough to be blanked in the same operation as the sideplate contour. The pressure equalizing chamber (16) has a convex contour facing the guide bar edge. This orients the overlapping parts of the orifices in such directions, that liquid sprayed from the orifices closest to the guide bar nose (19) has a velocity component towards the nose, and liquid sprayed from the orifices closest to the clamping end (20) has a velocity component towards the clamping end. An equivalent effect can also be achieved by drilling smaller orifices obliquely through through the sideplates, but this is more difficult and liable to clog.

With low liquid pressure the spray will not reach far outside the width of the chamber (16) and the liquid quantity will be limited. With a high liquid pressure the spray will reach a wider area and the liquid consumption will be higher.

The liquids used to protect the sawn surfaces, primarily the remaining stumps, from fungal infection, is either chemicals such as urea, or water suspensions of spores of harmless fungi which are antagonists or competitors to the harmful fungi. Pigments may be added to verify the liquid flow and to mark which surfaces have been treated.

## Claims

1. Guide bar for vehicle-born chain saws, comprising two sideplates (11,12) and a center plate (13), with means for spraying liquid on the sawn surface through a plurality of orifices (17) in at least one sideplate (11), where the liquid is conveyed through a cut-out in the center plate (13) from a supply hole (15) near the clamping end (20) of the guide bar, characterized by at least some of the orifices (17) being made to give the sprayed liquid velocity components in directions along the guide bar.

2. Guide bar according to claim 1, characterized by the cut-out comprising a pressure equalizing chamber (16) adjoining the orifices (17), and a channel (14) connecting the chamber to a supply hole (15), where the chamber (16) has larger cross section than the channel (14).

3. Guide bar according to claim 2, characterized by at least those orifices (17) giving the liquid velocity components along the guide bar overlapping the chamber (16) with only a minor part (18) of the area along their edge.

4. Guide bar according to claim 3, characterized by all orifices (17) overlapping the chamber (16) with only a minor part (18) of the area along their edge, giving the sprayed liquid velocity components in the plane of the sideplate, and the chamber having a convex contour facing the leading guide bar edge.

5. Guide bar according to claim 2, characterized by the guide bar having two chambers, two channels and orifices in both sideplates.

6. Method for spraying liquid on a surface sawn by a vehicle-born chain saw, characterized by supplying the liquid to the guide bar of the chain saw with a controlled liquid pressure, said guide bar being provided with a plurality of orifices (17) in at least one sideplate (11), at least some of said orifices giving the sprayed liquid velocity components in directions along the guide bar.

7. Method according to claim 6, characterized by controlling the liquid pressure to a value in proportion to the diameter of the tree to be sawn.

8. Method according to claim 7, characterized by measuring the diameter of the tree with measuring means on clamping means holding the tree, and adjusting the liquid pressure in proportion to the diameter.

## Patentansprüche

1. Schwert für Fahrzeug-Kettensägen mit zwei Seitenplatten (11,12) und einer Mittelplatte (13) mit Einrichtungen zum Sprühen von Flüssigkeit auf die Sägenoberfläche durch mehrere Öffnungen (17) in wenigstens einer Seitenplatte (11), wobei die Flüssigkeit durch einen Ausschnitt in der Mittelplatte (13) von einem Zufuhrloch (15) nahe dem Verklammerungsende (20) des Schwertes befördert wird, dadurch gekennzeichnet, daß wenigstens eine der Öffnungen (17) so ausgebildet ist, daß sie die Geschwindigkeitskomponenten der Sprühflüssigkeit in Richtungen entlang dem Schwert ergibt.

2. Schwert nach Anspruch 1, dadurch gekennzeichnet, daß der Ausschnitt eine Druckausgleichkammer (16), die an die Öffnungen (17) angrenzt, und einen Kanal (14), der die Kammer mit einer Zufuhröffnung (15) verbindet, umfaßt, wobei die Kammer (16) einen größeren Querschnitt als der Kanal (14) hat.

3. Schwert nach Anspruch 2, dadurch gekennzeichnet, daß wenigstens jene Öffnungen (17) die Geschwindigkeitskomponenten der Flüssigkeit entlang dem Schwert ergeben, die die Kammer (16) mit nur einem kleineren Teil (18) der Fläche entlang ihrer Kante überlappen.

4. Schwert nach Anspruch 3, dadurch gekennzeichnet, daß alle Öffnungen (17), die die Kammer (16) mit nur einem kleineren Teil (18) der Fläche entlang ihrer Kante überlappen, die Geschwindigkeitskomponenten der Sprühflüssigkeit in der Ebene der Seitenplatte ergeben und die Kammer einen konvexen Umriß hat, der zu der vorderen Schwertkante hinblickt.

5. Schwert nach Anspruch 2, dadurch gekennzeichnet, daß das Schwert zwei Kammern, zwei Kanäle und Öffnungen in beiden Seitenplatten hat.

6. Verfahren zum Sprühen von Flüssigkeit auf eine Oberfläche, die von einer Fahrzeug-Kettensäge gesägt wird, dadurch gekennzeichnet, daß man die Flüssigkeit dem Schwert der Kettensäge mit einem gesteuerten Flüssigkeitsdruck zuführt, wobei dieses Schwert mit mehreren Öffnungen (17) in wenigstens einer Seitenplatte (11) versehen ist und wobei wenigstens einige dieser Öffnungen die Geschwindigkeitskomponenten der Sprühflüssigkeit in Richtungen entlang dem Schwert ergeben.

7. Verfahren nach Anspruch 6, dadurch gekennzeichnet, daß man den Flüssigkeitsdruck auf einen Wert im Verhältnis zu dem Durchmesser des zu sägenden Baumes einsteuert.

8. Verfahren nach Anspruch 7, dadurch gekennzeichnet, daß man den Durchmesser des Baumes mit einer Meßeinrichtung auf der den Baum haltenden Verklammerungseinrichtung mißt und den Flüssigkeitsdruck im Verhältnis zu dem Durchmesser einstellt.

## Revendications

1. Guide-chaîne destiné à des tronçonneuses montées sur véhicule, comprenant deux plaques latérales (11, 12) et une plaque centrale (13), comportant un moyen destiné à pulvériser du liquide sur la surface sciée par l'intermédiaire d'un certain nombre d'orifices (17) dans au moins une plaque latérale (11), dans lequel le liquide est acheminé par l'intermédiaire d'une découpe dans la plaque centrale (13) depuis un trou d'alimentation (15) proche de l'extrémité de serrage (20) du guide-chaîne, caractérisé en ce qu'au moins certains des orifices (17) sont réalisés de façon à communiquer au liquide pulvérisé des composantes de vitesse suivant des directions le long du guide-chaîne.

2. Guide-chaîne selon la revendication 1, caractérisé en ce que la découpe comprend une chambre d'égalisation de pression (16) adjacente aux orifices (17), et un canal (14) reliant la chambre à un trou d'alimentation (15), dans lequel la chambre (16) présente une section transversale plus grande que le canal (14).

3. Guide-chaîne selon la revendication 2, caractérisé en ce qu'au moins les orifices (17) qui communiquent au liquide des composantes de vitesse le long du guide-chaîne chevauchent la chambre (16) suivant seulement une partie mineure (18) de la surface le long de leur bord.

4. Guide-chaîne selon la revendication 3, caractérisé en ce que tous les orifices (17) chevauchent la chambre (16) suivant seulement une partie mineure (18) de la surface le long de leur bord, en communiquant au liquide pulvérisé des composantes de vitesse dans le plan de la plaque latérale, et en ce que la chambre présente un contour convexe orienté vers le bord d'attaque du guide-chaîne.

5. Guide-chaîne selon la revendication 2, caractérisé en ce que le guide-chaîne comporte deux chambres, deux canaux, et des orifices dans les deux plaques latérales.

6. Procédé de pulvérisation de liquide sur une surface sciée par une tronçonneuse montée sur véhicule, caractérisé par l'alimentation du liquide vers le guide-chaîne de la tronçonneuse avec une pression de liquide commandée, ledit guide-chaîne étant muni d'un certain nombre d'orifices (17) dans au moins une plaque latérale (11), au moins certains desdits orifices communiquant au liquide pulvérisé des composantes de vitesse suivant des directions le long du guide-chaîne.

7. Procédé selon la revendication 6, caractérisé par la commande de la pression du liquide à une valeur en proportion du diamètre de l'arbre devant être scié.

8. Procédé selon la revendication 7, caractérisé par la mesure du diamètre de l'arbre à l'aide d'un moyen de mesure sur un moyen de serrage maintenant l'arbre, et l'ajustement de la pression du liquide en proportion du diamètre.
